# EUROPEAN PATENT APPLICATION

(11) **EP 1 760 126 A1**
(43) Date of publication of application: **07.03.2007**
(21) Application number: 05749049.2
(22) Date of filing: 10.06.2005
(51) Int. Cl.: C09D 183/04, B32B 7/02, B32B 27/00, C08J 7/04, C09D 5/16, C09D 5/32, C09D 7/12, C09D 183/08, G02B 1/10

(54) **SILOXANE COATING MATERIAL, OPTICAL ARTICLES AND PROCESS FOR THE PRODUCTION OF SILOXANE COATING MATERIALS**

(30) Priority: 11.06.2004 JP 2004173715; 27.07.2004 JP 2004218414
(71) Applicant: TORAY INDUSTRIES, INC., Tokyo 103-8666 (JP)
(72) Inventor: SUWA, Mitsuhito, 5202101 (JP); HOSONO, Hiroshi, 5200043 (JP); TAKEDA, Sayaka, 5202141 (JP); TANIGUCHI, Takashi, 5202324 (JP); MINAMIGUCHI, Hisashi, 5200025 (JP)
(74) Representative: Coleiro, Raymond
(86) International application number: PCT/JP2005/010647
(87) International publication number: WO 2005/121265

(57) **Abstract**

The invention provides a coating material containing silica fine particles, a siloxane compound, and a curing agent and giving an even coating film in the case it is used for forming a coating film. The invention gives a siloxane-based coating material excellent in storage stability and giving high surface hardness of a coating film when the coating material is used for forming the coating film. The invention also provides an optical article excellent in anti-reflection property and scratching resistance.

## Description

### Technical Field

The invention relates to a siloxane-based coating material containing silica fine particles and a siloxane compound and an optical article. The optical article of the invention is used for an anti-reflection coating, an anti-reflection film, an anti-reflection plate, an optical filter, an optical lens, a display, and the like.

### Background Art

The anti-reflection coating is to be used for suppressing reflection of an outer light source such as sunlight and a fluorescent lamp in an optical part such as a lens; or an image display apparatus such as a computer display, and improving the visibility and is therefore required to show little reflection of visible light. As a technique of preventing reflection, it is known that the reflectivity is lowered by coating the surface of a substrate with a transparent coating with a small refractive index (reference to Patent Document 1). Further, reflection is more efficiently prevented by forming a layer with a high refractive index on a substrate and forming a layer with a low refractive index thereon. A transfer material for a reflection-preventive electric control plate having a metal oxide-containing layer as a high refractive index layer on a base film having a releasing property and a siloxane-based resin layer as a low refractive index layer is also known well (reference to Patent Document 2).

As a low refractive index material for forming these low refractive index layers are known, in the case of an inorganic material, MgF₂ (refractive index 1.38), and SiO₂ (refractive index 1.47). Further, in the case of an organic material, there are perfluoro resins (refractive indexes 1.34 to 1.40), siloxane resins (refractive indexes 1.40 to 1.45), and the like.

On the other hand, it is also tried to lower the refractive index. For example, there is a technique which is for forming a low refractive index transparent coating by obtaining a coating material for coating film formation by dispersing hollow silica fine particles in an organic material, that is, a matrix material and applying and drying the coating material (reference to Patent Documents 3 and 4). That is, the fine particles are provided with a lowered refractive index by forming cavities surrounded with outer shells in the fine particles and the fine particles are dispersed and used.

However, if the addition amount of the silica fine particles is too much, although the refractive index of a transparent coating to be obtained may be further lowered, the silica fine particles and the matrix material cannot be bonded sufficiently to result in a problem of decrease of the hardness. The coating material for coating film formation containing a large amount of silica fine particles also is easy to cause secondary cohesion of the particles and has a problem of storage stability that the clusters are precipitated in the coating material for coating film formation.
Patent Document 1: Japanese Patent Application Laid-Open (JP-A) No. 2002-122704 (pages 1 to 4)
Patent Document 2: JP-A No. 2000-338306 (pages 2 to 3)
Patent Document 3: JP-A No. 2001-233611 (pages 7 to 11)
Patent Document 4: JP-A No. 2002-79616 (pages 1 to 2)

### Disclosure of the Invention

### Problems to be Solved by the Invention

The invention aims to provide a siloxane-based coating material in which silica fine particles do not cause secondary cohesion and have storage stability in the coating material and which gives high surface hardness of a coating film, that is, high scratching resistance of the coating film, obtained in the case of using it for forming the coating film and also aims to provide a production method of the coating material.

The invention aims to provide an optical article excellent in anti-reflection as well as scratching resistance.

### Means for Solving the Problems

The inventors of the invention have made various investigations and accordingly have accomplished the following inventions.

The invention provides a siloxane-based coating material containing silica fine particles, a siloxane compound, and a curing agent and giving a uniform coating film in the case the coating material is used for forming the coating film.

Further, the invention provides an optical article comprising a siloxane-based coating film on a transparent substrate in which the element content ratio of tetrafunctional silicon elements in entire silicon is in a range from 0.3 to 0.6; the content ratio of fluorine to silicon is in a range from 0.4 to 0.6; and the element content ratio of fluorine to carbon is in a range from 0.4 to 0.65 and which has a refractive index in a range from 1.25 to 1.4.

The invention provides a production method of a siloxane-based coating material by hydrolyzing a silane compound in a solvent by an acid catalyst in the presence of silica fine particles and successively subjecting the hydrolyzed product to condensation reaction.

### Effects of the Invention

With respect to the siloxane-based coating material of the invention, the silica fine particles in the coating material are prevented from secondary cohesion and accordingly the storage stability of the coating material is improved by previously making the silica fine particles and the siloxane compound even. Further, in the case of forming a coating film using the coating material, a coating film with excellent surface hardness can be obtained. The obtained coating film is preferably usable for a low refractive index layer of an anti-reflection sheet and an anti-reflection film.

Having a coating film with a refractive index in a range from 1.25 to 1.4 and containing silicon, carbon, and fluorine at specified ratios, the optical article of the invention is excellent in an anti-reflection property and provides excellent scratching resistance.

### Brief Description of the Drawings

[Fig. 1] Fig. 1 is a TEM photograph of a cross-sectional view of a coating film of Example 1 observed at 40,000 times magnification.
[Fig. 2] Fig. 2 is a TEM photograph of the siloxane-based coating film in Fig. 1 magnified at 200, 000 times magnification.
[Fig. 3] Fig. 3 is a TEM photograph of a cross-sectional view of a coating film of Comparative Example 1 observed at 40,000 times magnification.
[Fig. 4] Fig. 4 is a TEM photograph of the siloxane-based coating film in Fig. 3 magnified at 200,000 times magnification.
[Fig. 5] Fig. 5 is a TEM photograph of a cross-sectional view showing another example of uneven siloxane-based coating film magnified at 200,000 times magnification.

### Explanation of Symbols

- 1.: a cavity in the insides of silica fine particles
- 2.: an outer shell of silica fine particles
- 3.: a siloxane compound
- 4.: a boundary
- 10.: a siloxane-based coating film
- 11.: a high refractive index anti-static layer
- 12.: a hard coat layer

### Best Modes of the Embodiments

Hereinafter, the invention will be described specifically.

A siloxane-based coating material of the invention contains silica fine particles, a siloxane compound, and a curing agent and in the case of using the coating material for coating film formation, the obtained coating film becomes even.

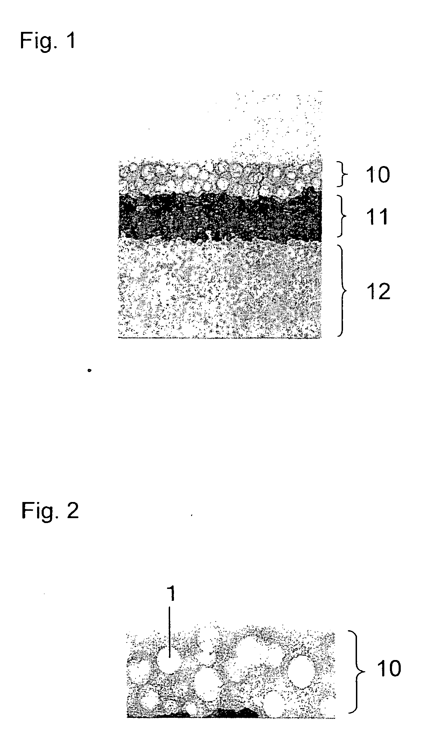

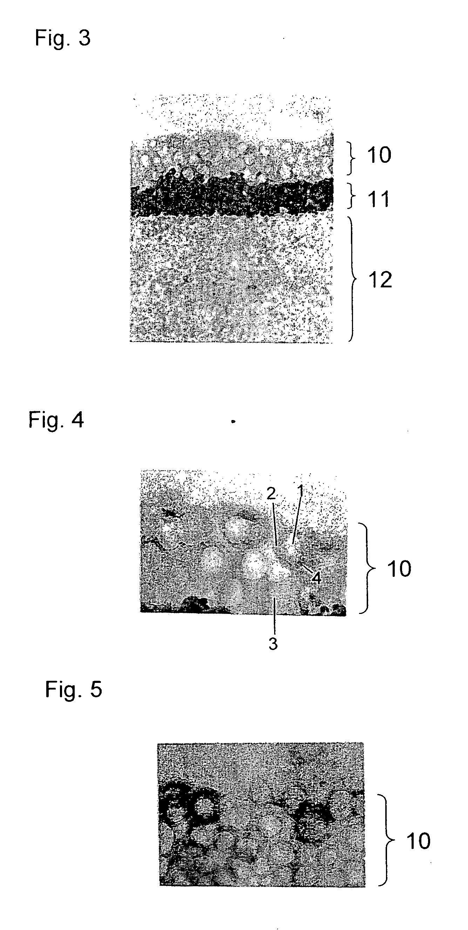

Herein, "becoming even" means the state that the silica components of the silica fine particles and the siloxane compound of the matrix are reacted with each other and become even. The state can be observed by observing the boundary parts of the silica fine particles and the siloxane compound by a transmission electron microscope (hereinafter, referred to as TEM). An example of the even state is shown in Fig. 2 and an example of an uneven state is shown in Fig. 4 and Fig. 5. Figs. 2, 4, and 5 are all TEM photographs showing cross-sectional views of siloxane-based coating films containing silica.fine particles having cavities surrounded with outer shells. In the siloxane-based coating film 10 shown in Fig. 2, those seen like white circles are cavities 1 in the insides of the silica fine particles. The outsides of the white circles are outer shells of the silica fine particles and the siloxane compound. As shown in the drawing, both are made even and no boundary part of the silica fine particles and the siloxane compound is observed. In Figs. 4 and 5, those seen like white circles are the cavities 1 in the insides. Different from the case shown in Fig. 2, in Figs. 4 and 5, dark-color thin layers exist surrounding the white circles and a pale color matrix exists further outside of the layers. The dark-color thin layers are outer shells 2 of the silica fine particles and the pale color matrix is a siloxane compound 3. That is, since both are not made even, as shown in the drawings, a boundary part 4 of the silica fine particles and the siloxane compound is clearly observed. In other words, in the even state, as shown in Fig. 2, no boundary part is observed between the silica fine particles and the siloxane compound and on the other hand, in the uneven state, as shown in Figs. 4 and 5, the boundary part is clearly observed between the silica fine particles and the siloxane compound.

It is supposed that such an even state is produced due to bonding of the silica fine particles and the siloxane compound. Accordingly, the dispersion stability of the silica fine particles in the siloxane-based coating material is improved and secondary cohesion can be suppressed. Further, in the case of forming a coating film, since the siloxane compound, which is a matrix material, and the silica fine particles are firmly bonded, the surface hardness of the coating film is improved.

The siloxane-based coating material of the invention can be obtained by hydrolyzing a silane compound in a solvent by an acid catalyst in the presence of silica fine particles for obtaining a silanol compound and subjecting the silanol compound to condensation reaction. Examples preferable of the silanol compound are one or more silane compounds selected from silane compounds defined by the following formulas (1) to (5).

The obtained coating material contains a siloxane compound, which is a condensate product of these silane compounds. Further, the coating material may contain un-condensed silanol compound, although the silane compound is hydrolyzed.

R¹Si(OR⁶)₃ (1)

R¹ denotes a fluoroalkyl group having 3 to 17 fluorine atoms. The number of fluorine atoms for R¹ is preferably 6 to 8. If the number of fluorine atom per one molecule is high, the hardness of a coating film to be obtained tends to be decreased. The number of carbon atoms for R¹ is preferably 3 to 10, since the scratching resistance of the coating film to be obtained can be improved. The number of carbon atoms is particularly preferably 3.

R⁶ denotes a methyl group, an ethyl group, a propyl group, an isopropyl group, or an acetyl group and all may be same or different. R⁶ is more preferably a methyl group or an ethyl group.

If the trifunctional silane compound defined by the formula (1) is used, the refractive index of a coating film to be obtained can be lowered and therefore it is preferable.

R²Si(OR⁷)₃ (2)

R² denotes a group selected from a vinyl group, an allyl group, an alkenyl group, an acryl group, a methacryl group, a methacryloxy group, a cyano group, an epoxy group, a glycidoxy group, an amino group, and their substituted groups. The number of carbon atoms for R² is preferably 2 to 10, since the scratching resistance of the coating film to be obtained can be improved.

R⁷ denotes a methyl group, an ethyl group, a propyl group, an isopropyl group, a methoxymethyl group, or an acetyl group and all may be same or different. R⁷ is more preferably a methyl group or an ethyl group.

If the trifunctional silane compound defined by the formula (2) is used, the hardness of the coating film to be obtained can be improved and therefore it is preferable.

R³Si(OR⁸)₃ (3)

R³ denotes a group selected from an alkyl group, an aryl group, and their substituted groups. The number of carbon atoms for R³ is preferably 1 to 6, since the scratching resistance of the coating film to be obtained can be improved. If the number of carbon atoms for R³ exceeds 6, the hardness of a coating film to be obtained tends to be lowered.

R⁸ denotes a methyl group, an ethyl group, a propyl group, or a butyl group and all may be same or different. R⁸ is more preferably a methyl group or an ethyl group.

If the trifunctional silane compound defined by the formula (3) is used, the hardness of the coating film to be obtained can be improved and therefore it is preferable.

R⁴R⁵Si (OR⁹)₂ (4)

R⁴ and R⁵ independently denote a group selected from hydrogen, an alkyl group, a fluoroalkyl group, an aryl group, an alkenyl group, a methacryloxy group, an epoxy group, a glycidoxy group, an amino group, and their substituted groups and may be same or different. The number of carbon atoms for R⁴ and R⁵ is preferably 1 to 6, since the scratching resistance of the coating film to be obtained can be improved.

R⁹ denotes a methyl group, an ethyl group, a propyl group, an isopropyl group, or an acetyl group and all may be same or different. R⁸ is more preferably a methyl group or an ethyl group.

If the bifunctional silane compound defined by the formula (4) is used, the flexibility of the coating film to be obtained can be improved and therefore it is preferable.

Si(OR¹⁰)₄ (4)

R¹⁰ denotes a methyl group or an ethyl group and all may be same or different.

If the tetrafunctional silane compound defined by the formula (5) is used, the hardness of the coating film to be obtained can be improved and therefore it is preferable.

These silane compounds defined by these formulas (1) to (5) may be used either alone or in combination of two or more.

The content of the siloxane compound is preferably in a range from 20% by weight to 70% by weight and more preferably in a range from 30% by weight to 60% by weight based on the total amount of the coating film at the time of forming the coating film. If the siloxane compound is contained in the above-mentioned range, the refractive index of the coating film can be lowered and the hardness of the coating film can be heightened and therefore it is preferable. Accordingly, the content of the siloxane compound in the coating material is preferably in the above-mentioned range in the entire components except the solvent.

Among these compounds, to lower the refractive index, it is preferable to use the fluorine-containing silane compound defined by the formula (1) as an indispensable component and to use one or more silane compounds selected from the silane compounds defined by the formulas (2) to (5) in combination. The amount of the silane compound defined by the formula (1) is preferably in a range from 20% by weight to 80% by weight and more preferably in a range from 30% by weight to 60% by weight based on the total amount of the silane compounds. If the amount of the silane compound is lower than 20% by weight, the refractive index may be insufficiently lowered in some cases. On the other hand, if the amount of the silane compound exceeds 80% by weight, the hardness of the coating film may be possibly decreased.

Specific examples of the silane compounds defined by the formulas (1) to (5) shows below.

Examples of the trifunctional silane compounds defined by the formula (1) may include trifluoromethyltrimethoxysilane, trifluoromethyltriethoxysilane, trifluoromethyltriacetoxysilane, trifluoropropyltrimethoxysilane, trifluoropropyltriethoxysilane, trifluoropropyltriacetoxysilane, trifluoroacetoxyethyltrimethoxysilane, trifluoroacetoxyethyltriethoxysilane, trifluoroacetoxyethyltriacetoxysilane, perfluoropropylethyltrimethoxysilane, perfluoropropylethyltriethoxysilane, perfluoropropylethyltriacetoxysilane, perfluoropentylethyltrimethoxysilane, perfluoropentylethyltriethoxysilane, perfluoropentylethyltriacetoxysilane, tridecafluorooctyltrimethoxysilane, tridecafluorooctyltriethoxysilane, tridecafluorooctyltripropoxysilane, tridecafluorooctyltriisopropoxysilane, heptadecafluorodecyltrimethoxysilane, and heptadecafluorodecyltriethoxysilane. In terms of the hardness of the obtained coating film, trifluoromethyltrimethoxysilane, trifluoromethyltriethoxysilane, trifluoropropyltrimethoxysilane, and trifluoropropyltriethoxysilane are preferable among these silane compounds.

Examples of the trifunctional silane compounds defined by the formula (2) may include vinyltrimethoxysilane, vinyltriethoxysilane, vinyltriacetoxysilane, γ-methacryloxypropyltrimethoxysilane, γ-methacryloxypropyltriethoxysilane, γ-aminopropyltrimethoxysilane, γ-aminopropyltriethoxysilane, N-β-(aminoethyl)-γ-aminopropyltrimethoxysilane, β-cyanoethyltriethoxysilane, glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltrimethoxyethoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)methyltrimethoxysilane, β-(3,4-epoxycyclohexyl)methyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltrimethoxyethoxysilane, β-(3,4-epoxycyclohexyl)ethyltriphenoxysilane, β-(3,4-epoxycyclohexyl)propyltrimethoxysilane, β-(3,4-epoxycyclohexyl)propyltriethoxysilane, δ-(3,4-epoxycyclohexyl)butyltrimethoxysilane, and δ-(3,4-epoxycyclohexyl)butyltriethoxysilane. In terms of the hardness of the obtained coating film, vinyltrialkoxysilane and 3-methacryloxypropyltrialkoxysilane are preferable among these silane compounds.

Examples of the trifunctional silane compounds defined by the formula (3) may include methyltrimethoxysilane, methyltriethoxysilane, methyltrimethoxyethoxysilane, methyltriacetoxysilane, methyltripropoxysilane, methyltributoxysilane, ethyltrimethoxysilane, ethyltriethoxysilane, hexyltrimethoxysilane, octadecyltrimethoxysilane, octadecyltriethoxysilane, phenyltrimethoxysilane, phenyltriethoxysilane, 3-aminopropyltriethoxysilane, N-(2-aminoethyl)-3-aminopropyltrimethoxysilane, 3-chloropropyltrimethoxysilane, 3-(N,N-diglycidyl)aminopropyltrimethoxysilane, and 3-glycidoxypropyltrimethoxysilane. In terms of the hardness of the obtained coating film, methyltrimethoxysilane, methyltriethoxysilane, phenyltrimethoxysilane, and phenyltriethoxysilane are preferable among these silane compounds.

Examples of the bifunctional silane compounds defined by the formula (4) may include dimethylmethoxysilane, dimethyldiethoxysilane, dimethyldiacetoxysilane, diphenyldimethoxysilane, diphenyldiethoxysilane, methylphenyldimethoxysilane, methylvinyldimethoxysilane, methylvinyldiethoxysilane, γ-glycidoxypropylmethyldimethoxysilane, γ-aminopropylmethyldimethoxysilane, γ-aminopropylmethyldiethoxysilane, N-(2-aminoethyl)-3-aminopropylmethyldimethoxysilane, γ-methacryloxypropylmethyldimethoxysilane, γ-methacryloxypropylmethyldiethoxysilane, glycidoxymethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, β-glycidoxypropylmethyldibutoxysilane, γ-glycidoxypropylmethyldimethoxyethoxysilane, γ-glycidoxypropylmethyldiphenoxysilane, γ-glycidoxypropylmethyldiacetoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, trifluoropropylmethyldimethoxysilane, trifluoropropylmethyldiethoxysilane, trifluoropropylmethyldiacetoxysilane, trifluoropropylethyldimethoxysilane, trifluoropropylethyldiethoxysilane, trifluoropropylethyldiacetoxysilane, trifluoropropylvinyldimethoxysilane, trifluoropropylvinyldiethoxysilane, trifluoropropylvinyldiacetoxysilane, heptadecafluorodecylmethyldimethoxysilane, 3-chloropropylmethyldimethoxysilane, 3-chloropropylmethyldiethoxysilane, cyclohexylmethyldimethoxysilane, 3-methacryloxypropyldimethoxysilane, and octadecylmethyldimethoxysilane. In order to provide flexibility to the obtained coating film, dimethyldialkoxysilanes are preferably used among these silane compounds.

Examples of the tetrafunctional silane compounds defined by the formula (5) may be tetramethoxysilane and tetraethoxysilae.

The number average particle diameter of the silica fine particles to be used in the invention is preferably in a range from 1 nm to 200 nm and more preferably in a range from 1 nm to 70 nm. The number average particle diameter is smaller than 1 nm, the bonding of the particles to the matrix material becomes insufficient and the hardness of the coating film tends to be decreased. On the other hand, if the number average particle diameter exceeds 200 nm, the void formation among the particles formed by introduction of the particles is lessened and thus the effect to lower the refractive index may not be caused sufficiently.

Herein, with respect to the average particle diameter of the silica fine particles, the number average particle diameter may be measured by using various kinds of particle counters. It is preferable to measure the particle diameter of the silica fine particles before addition. Further, after the film formation, a method for measuring the particle diameter of the silica fine particles in the coating film is preferably carried out by using an electron scanning microscope or a transmission electron microscope.

The number average particle diameter of the silica fine particles is preferable to be smaller than the thickness of the coating film to be formed. If it exceeds the thickness of the coating film, the silica fine particles are exposed in the coating film surface and not only the anti-reflection property is deteriorated but also the surface hardness and the stain resistance of the coating film may also be decreased.

The silica fine particles to be used in the invention are preferably silica fine particles having silanol groups in the surface in order to make the reaction with the siloxane compound of the matrix easy.

In the invention, both of silica fine particles having no cavities in the inside and silica fine particles having cavities in the inside as the silica fine particles. Between these silica fine particles, in order to lower the refractive index of the coating film to be obtained, the silica fine particles having cavities in the inside are preferable. Since the silica fine particles having no cavities in the inside have the refractive index of the particles themselves in a range from 1.45 to 1.50, the effect to lower the refractive index is slight. On the other hand, since the silica fine particles having cavities in the inside have the refractive index of the particles themselves in a range from 1.20 to 1.40, the effect to lower the refractive index is significant.

The silica fine particles having cavities in the inside may be silica fine particles having cavity parts surrounded with outer shells and porous silica fine particles having a large number of cavity parts. Among them, in consideration of the hardness of the coating film, the porous silica fine particles having high strength of the particles themselves are preferable. The refractive index of the fine particles is in a range from 1.20 to 1.40 and preferably in a range from 1.20 to 1.35. The number average particle diameter of the silica fine particles having cavities in the inside is preferably in a range from 5 nm to 100 nm. The refractive index of the silica fine particles can be measured by a method disclosed in the paragraph [0034] of JP-A No. 2001-233611.

In the case of forming the coating film, the content of the silica fine particles is preferably in a range from 30% by weight to 80% by weight and more preferably based on a range from 40% by weight to 70% by weight based on the total amount of the coating film. Accordingly, the content of the silica fine particles in the coating material is preferably in the above-mentioned range in the total components except the solvent. If the silica fine particles are added in the above-mentioned range in the coating film, not only the refractive index can be lowered but also the hardness of the coating film can be heightened. If the content of the silica fine particles is lower than 30% by weight, the effect to lower the refractive index by the voids among the particles may be possibly lowered. On the other hand, the content of the silica fine particles exceeds 80% by weight, many island phenomena occur in the coating film and therefore, the hardness of the coating film may be possibly lowered. Further, the refractive index becomes uneven in some points, and thus it is not preferable.

Examples of the silica fine particles having no cavity in the inside may be IPA-ST having a particle diameter of 12 nm and using isopropanol as a dispersant, MIBK-ST having a particle diameter of 12 nm and using methyl isobutyl ketone as a dispersant, IPA-ST-L having a particle diameter of 45 nm and using isopropanol as a dispersant, and IPA-ST-ZL having a particle diameter of 100 nm and using isopropanol as a dispersant (trade name: all exemplified above are manufactured by Nissan Chemical Industries, Ltd.); Oscal(registered trademark) 101 having a particle diameter of 12 nm and using γ-butyrolactone as a dispersant, Oscal(registered trademark) 105 having a particle diameter of 60 nm and using γ-butyrolactone as dispersant, and Oscal(registered trademark) 106 having a particle diameter of 120 nm and using dieacetone alcohol as a dispersant (trade name: all exemplified above are manufactured by Catalysts and Chemicals Industries Co., Ltd.).

The silica fine particles having cavities in the inside can be produced by a method described in the paragraphs [0033] to [0046] of JP-A No. 2001-233611 and a method described in the paragraph [0043] of Japanese Patent No. 3272111. Those which are commonly commercialized may be also usable.

In the hydrolysis reaction, it is preferable to carry out reaction at a temperature from a room temperature to 80°C for 1 to 180 minutes after the acid catalyst and water are added in a solvent over from 1 to 180 minutes. If the hydrolysis reaction is carried out in such conditions, abrupt reaction can be suppressed. The reaction temperature is preferably 40 to 70°C.

After the silanol compound is obtained by the hydrolysis, the reaction solution is heated as it is at a temperature of not lower than 50°C and not higher than the boiling point of the solvent for 1 to 100 hours to carry out condensation reaction. Further, in order to improve the polymerization degree of the siloxane compound, reheating or addition of a basic catalyst may be carried out.

Further, the various conditions in the hydrolysis may be set by adjusting the acid concentration, the reaction temperature, the reaction duration in consideration and the like of the reaction scale, and the size and the shape of the reaction container, so that physical properties suitable for applications can be obtained.

The acid catalyst to be used for the hydrolysis reaction may be hydrochloric acid, acetic acid, formic acid, nitric acid, oxalic acid, hydrochloric acid, sulfuricacid, phosphoric acid, polyphosphoric acid, polycarboxylic acid, their anhydrides, and ion exchange resin. In Particular, an aqueous acidic solution using formic acid, acetic acid, or phosphoric acid is preferable.

The addition amount of these acid catalysts is preferably from 0.05% by weight to 10% by weight and more preferably from 0.1% by weight to 5% by weight based on the entire silane compound used at the time of hydrolysis reaction. If the addition amount of the acid catalyst is lower than 0.05% by weight, the hydrolysis reaction may not be carried out sufficiently in some cases. On the other hand, if the addition amount of the acid catalyst exceeds 10% by weight, the hydrolysis reaction may be carried out explosively in some cases.

The solvent is not particularly limited and may be determined in consideration of stability, wettability, and volatile property of the siloxane-based coating material. Not only one solvent but also two or more solvents in form of a mixture may be used. Specific examples of the solvent may be alcohols such as methanol, ethanol, propanol, isopropanol, butanol, isobutanol, tert-butanol, pentanol, 4-methyl-2-pentanol, 3-methyl-2-butanol, 3-methyl-3-methoxy-1-butanol, and dieacetone alcohol; glycols such as ethylene glycol and propylene glycol; ethers such as ethylene glycol monomethyl ether, ethylene glycol monoethyl ether, propylene glycol monomethyl ether, propylene glycol monoethyl ether, propylene glycol monopropyl ether, propylene glycol monobutyl ether, propylene glycol mono-tert-butyl ether, ethylene glycol dimethyl ether, ethylene glycol diethyl ether, ethylene glycol dibutyl ether, and diethyl ether; ketones such as methyl ethyl ketone, acetyl acetone, methyl propyl ketone, methyl butyl ketone, methyl isobutyl ketone, diisobutyl ketone, cyclopantanone, and 2-heptanone; amides such as dimethylformamide and dimethylacetamide; acetates such as ethyl acetate, propyl acetate, butyl acetate, isobutyl acetate, ethylene glycol monoethyl ether acetate, propylene glycol monomethyl ether acetate, 3-methoxybutyl acetate, 3-methyl-3-methoxybutyl acetate, methyl lactate, ethyl lactate, and butyl lactate; aromatic or aliphatic hydrocarbons such as toluene, xylene, and cyclohexane; and further γ-butyrolactone, N-methyl-2-pyrrolidone, and dimethyl sulfoxide.

With respect to the hydrolysis reaction, in the case where a solvent is produced due to the reaction, it is possible to carry out the hydrolysis without using a solvent. On completion of the reaction, it is also preferable to adjust the concentration as a coating material by further adding a solvent. Further, in accordance with the purposes, a proper amount of the produced alcohol may be distilled or removed by heating or in reduced pressure and a proper solvent may be added thereafter.

The amount of the solvent to be used at the time of hydrolysis is preferably in a range from 50% by weight to 500% by weight and more preferably in a range from 80% by weight to 200% by weight based on the total silane compound weight. If the solvent amount is lower than 50% by weight, the reaction is carried out explosively and gelling may sometimes occur. On the other hand, if the amount of the solvent exceeds 500% by weight, hydrolysis may not be promoted in some cases.

Water to be used for the hydrolysis reaction is preferably ion exchanged water. The amount of water may be optionally selected, however it is preferable to use water in an amount of 1.0 to 4.0 mole to 1 mole of the silane compound.

As the curing agent to be used in the invention, various kinds of curing agents and three-dimensional crosslinking agents which promote curing of the siloxane-based coating material or make its curing easy are exemplified. Specific examples of the curing agent may be nitrogen-containing organic materials, silicone resin curing agents, various kinds of metal alcoholates, various kinds of metal chelate compounds, isocyanate compounds and their polymers, melamine resins, polyfunctional acrylic resins, and urea resins and one or more of these compounds may be added. Especially in terms of the stability of the curing agent and processibility of the obtained coating film, metal chelate compounds are preferable to be used. Examples to be used as the metal chelate compounds may be titanium chelate compounds, zirconium chelate compounds, aluminum chelate compounds, and magnesium chelate compounds. Among them, aluminum chelate compounds and/or magnesium chelate compounds with a low refractive index are preferable for the purpose of lowering the refractive index. These metal chelate compounds may be obtained easily by causing reaction of a chelating agent on a metal alkoxides. Examples of the chelating agent are β-diketones such as acetyl acetone, benzoyl acetone, and dibenzoylmethane; and β-keto-acid esters such as ethyl acetoacetate and ethyl benzoylacetate. Specific preferable examples to be used as the metal chelate compound are aluminum chelate compounds such as ethylacetoacetate aluminum diisopropylate, aluminum tris(ethyl acetoacetate), alkylacetoacetate aluminum diisopropylate, aluminum monoacetylacetate bis(ethylacetoacetate), and aluminum tris(acetylacetonate); and magnesium chelate compounds such as ethylacetoacetate magnesium monoisopropylate, magnesium bis(ethylacetoacetate), alkylacetoacetate magnesium monoisopropylate, and magnesium bis(acetylacetonate). Among them, aluminum tris(acetylacetonate), aluminum tris(ethylacetoacetate), magnesium bis(acetylacetonate) and magnesium bis(ethylacetoacetate) are preferable. In terms of the storage stability and availability, aluminum tris(acetylacetonate) and aluminum tris(ethylacetoacetate) are more preferable. The addition amount of the curing agent is preferably in a range from 0.1% by weight to 10% by weight and more preferably in a range from 1% by weight to 6% by weight based on the entire silane compound amount in the siloxane-based coating material. Herein the entire silane compound amount means the total amounts of the silane compound, its hydrolyzed products, and its condensates. If the amount is lower than 0.1% by weight, the hardness of the coating film to be obtained is lowered. On the other hand, if it exceeds 10% by weight, the curing becomes insufficient and although the hardness of the coating film to be obtained can be improved, the refractive index is also increased and thus it is not preferable.

The siloxane-based coating material of the invention is preferable to be used while being mixed with a solvent having a boiling point of from 100 to 180°C in atmospheric pressure and a solvent having a boiling point lower than 100°C in atmospheric pressure. Addition of the solvent having a boiling point of from 100 to 180°C in atmospheric pressure improve the coatability of the coating solution and makes it possible to form a coating film with smooth surface. Further, addition of the solvent having a boiling point lower than 100°C in atmospheric pressure makes it possible to efficiently evaporate the solvent and give a coating film with high hardness. That is, a coating film with smooth surface and having high hardness can be obtained.

If a solvent having a boiling point lower than 100°C is used, since the solvent is evaporated and application of some compositions cannot be carried out at the time of applying the coating material. On the other hand, if a solvent having a boiling point exceeding 180°C, the solvent remains in the coating film and the hardness is lowered and it results in undesirable consequence.

Specific examples of the solvent having a boiling point of from 100 to 180°C in atmospheric pressure are ethers such as ethylene glycol monomethyl ether, ethylene glycol monoethyl ether, propylene glycol monomethyl ether, propylene glycol monoethyl ether, propylene glycol monopropyl ether, propylene glycol monombutyl ether, propylene glycol mono-tert-butyl ether, ethylene glycol dimethyl ether, ethylene glycol diethyl ether, and ethylene glycol dibutyl ether; acetates such as ethylene glycol monoethyl ether acetate, propylene glycol monomethyl ether acetate, propyl acetate, butyl acetate, isobutyl acetate, 3-methoxybutyl acetate, 3-methyl-3-methoxybutyl acetate, methyl lactate, ethyl lactate, and butyl lactate; ketones such as acetyl acetone, methyl propyl ketone, methyl butyl ketone, methyl isobutyl ketone, cyclopantanone, and 2-heptanone; alcohols such as butanol, isobutyl alcohol, pentanol, 4-methyl-2-pentanol, 3-methyl-2-butanol, 3-methyl-3-methoxy-1-butanol, dieacetone alcohol; and aromatic hydrocarbons such as toluene and xylene. They may be used alone or while being mixed. Particularly preferable solvents among them are propylene glycol monomethyl ether, propylene glycol monoethyl ether, propylene glycol monopropyl ether, and dieacetone alcohol. The content of the solvent having a boiling point of from 100 to 180°C in atmospheric pressure in the siloxane-based coating material of the invention is preferably of from 100% by weight to 700% by weight based on the total silane compound weight. If the solvent amount is lower than 100% by weight, the curing reaction at the time of film formation is not promoted well and the hardness is lowered. On the other hand, if the solvent amount exceeds 700% by weight, the solvent remains in the coating film and therefore, the hardness of the coating film to be obtained may be lowered.

Examples of the solvent having a boiling point lower than 100°C in atmospheric pressure may be methanol, ethanol, isopropanol, tert-butanol, and methyl ethyl ketone. These solvents may be used alone or while being mixed.

The content of the solvent having a boiling point lower than 100°C in atmospheric pressure in the siloxane-based coating material of the invention is preferably of from 100% by weight to 5000% by weight based on the total silane compound weight. If the solvent amount is lower than 100% by weight, the curing reaction at the time of film formation is not promoted well. On the other hand, if the solvent amount exceeds 5000% by weight, the solvent evaporation unevenness becomes significant at the time of film formation and the smoothness of the coating film surface is deteriorated and therefore, the hardness of the coating film to be obtained may be lowered.

The total content of the entire solvents in the siloxane-based coating material of the invention is preferably of from 1300% by weight to 9900% by weight and more preferably of from 1500% by weight to 6000% by weight based on the total silane compound weight. If the content of the entire solvents is lower than 1300% by weight or exceeds 9900% by weight, it becomes difficult to form a coating film with a prescribed thickness.

Herein, the total silane compound weight means the total weights of the silane compound, and its hydrolyzed products and condensates.

It is also preferable to further add a fluorine-containing silane compound defined by the above-mentioned formula (1) to the siloxane-based coating material of the invention, without hydrolysis. If such a fluorine-containing silane compound is added, owing to the effect of the fluorine at the time curing, the compound is moved to the interface to improve the stain resistance property of the coating film. The addition amount is preferably of from 0.01% by weight to 10% by weight to the total silane compound weight. If the amount is lower than 0.01% by weight, the stain resistance property of the coating film cannot be improved in some cases. On the other hand, if the content exceeds 10% by weight, the reaction of the film surface is not promoted well and the hardness may be sometimes decreased.

It is also preferable to further add an unsaturated group-containing silane compound defined by the above-mentioned formula (2) to the siloxane-based coating material of the invention, without hydrolysis. If such an unsaturated group-containing silane compound is added, the unsaturated group is polymerized at the time of curing to increase the crosslinking density, and the hardness and strain resistance property can be improved. The addition amount is preferably of from 0.01% by weight to 10% by weight based on the total silane compound weight. If the amount is lower than 0.01% by weight, the hardness of the coating film to be obtained cannot be improved in some cases. On the other hand, if the content exceeds 10% by weight, the reaction of the film surface is not promoted well and the hardness may be sometimes decreased.

If necessary, a viscosity adjustment agent, a surfactant, a stabilizer, a coloring agent, and a glassy substance formation agent may be added to the siloxane-based coating material of the invention.

To improve the flow-ability at the time of application, various kinds of surfactants may be used. In particular, in terms of stain prevention of the anti-reflection coating film and further improvement of the prevention in addition to the flow-ability, fluorine type surfactant addition is preferable.

The siloxane-based coating material of the invention is applied to a substrate, heated, dried, and cured to form a siloxane-based coating film.

The obtained coating film is even as described above and even by TEM, no boundary part between the silica fine particles and the siloxane compound cannot be observed. That is, the siloxane compound, which is the matrix, and the silica fine particles are bonded to give high hardness to the coating film. Further, the siloxane-based coating material of the invention is stable even if it contains a large quantity of the silica fine particles and the coating film with smooth surface can be obtained, so that the coating film to be obtained can be provided with high hardness and low refractive index by adding a large quantity of the silica fine particles.

An application method of the siloxane-based coating material of the invention may be preferably micro-gravure coating, spin coating, dip coating, curtain flow coating, roll coating, spray coating, and spreading coating method. In terms of the evenness of the anti-reflection property, that is, prevention of unevenness of reflected light color, the micro-gravure coating is particularly preferable to be employed.

The heating and drying conditions have to be determined in accordance with the substrate and the coating material, it is generally preferable to carry out these steps at a temperature of not lower than a room temperature and not higher than 300°C for 0.5 to 240 minutes. The curing temperature is particularly preferably of from 100 to 180°C and more preferably of from 110 to 150°C.

The thickness of the coating film after curing is preferably of from 0.001 to 0.5 µm. If the thickness is thinner than 0.001 µm, the hardness of the coating film is decreased. If the thickness exceeds 0.5 µm, the unevenness of the film thickness becomes significant and it is therefore undesirable. The lower limit of the thickness is preferably not thinner than 0.01 µm, more preferably not thinner than 0. 05 µm, and even more preferably not thinner than 0.07 µm. The upper limit of the thickness is preferably not thicker than 0.2 µm and more preferably not thicker than 0.15 µm.

The coating film formed from the siloxane-based coating material of the invention may be used as a low refractive index layer to be used for anti-reflection, a buffer coat for a semiconductor device, a leveling agent, a protection film of a liquid crystal display as well as an interlayer insulating film, a material for forming a waveguide, a material for a phase shifter, and various kinds of protection films. Especially, since both of the high surface hardness and low refractive index can be satisfied, it is particularly preferably used as a low refractive index layer for anti-reflection of an optical article. Herein, the optical article may be an anti-reflection coating film, an anti-reflection film, an anti-reflection plate, an optical filter, an optical lens, and a display and particularly it is used preferably as a low refractive index layer for the anti-reflection sheet and the anti-reflection film.

In the case of using the coating film for anti-reflection, the refractive index of the coating film is preferably of from 1.25 to 1.4. The refractive index of the coating film is preferably not more than 1.38 in terms of the anti-reflection.

The substrate to be used in the invention is not particularly limited and in the case where it is used for the optical article, a transparent substrate is preferable to be used. The transparent substrate specifically means a substrate having haze (an index showing fogging degree) of not more than 40% and preferably not more than 20%. Specific materials are glass and plastics. Further, the transparent substrate may be colored with dyes or pigments and ti is not a cause for concern. In terms of optical characteristics such as transparency, refractive index, and dispersibility and further physical properties such as impact resistance, heat resistance, durability, mechanical strength, chemical resistance, and formability, plastic materials are particularly preferably usable. The plastic materials are preferably thermoplastic resins and thermosetting resins such as polyesters, especially polyethylene terephthalate; unsaturated polyesters, acrylonitrile-styrene copolymer; polyvinyl chlorides, polyurethanes, epoxy resins, and polycarbonates.

To use a material having a hard coat layer capable of providing further higher hardness as a transparent substrate is a preferable embodiment since the physical properties such as the adhesiveness to the coating film of the invention, hardness, chemical resistance, heat resistance, durability, and the like can be improved.

A material for the hard coat layer may be any kinds of materials which have been known as a surface hardness improvement material for plastics. Examples of the material for the hard coat layer may include inorganic fine particles represented by metal oxides of titanium, aluminum, silicon, and thin and examples of the matrix resin may be (meth)acrylate resins, silicone resins, polyurethane resins, melamine resins, and urea resins.

The thickness of the hard coat layer is preferably of from 0.2 to 20 µm. If the coating film is thinner than 0.2 µm, the coating film to be obtained may be lowered. If the thickness exceeds 20 µm, cracks tend to be formed and handling property and the productivity may be deteriorated. The lower limit of the thickness is preferably not thinner than 0.5 µm and more preferably not thinner than 1 µm. The upper limit of the thickness is preferably not thicker than 10 µm.

With respect to the substrate to be used in the invention, to improve the anti-reflection property, a high refractive index layer is preferable to be formed directly or via the hard coat layer on the transparent substrate.

A material of the high refractive index layer is preferably a ultraviolet curable composition in terms of the adhesiveness to the low refractive index siloxane-based coating film formed thereon and the after-curing property.

The ultraviolet curable composition may include polyfunctional (meth)acrylic compounds having two or more (meth)acryloyl groups in the molecule. Specific examples of these compounds may be aliphatic polyfunctional (meth) acrylate compounds such as mono-, di-, or tri-ethylene glycol di(meth)acrylate and mono-, di-, or tri-propylene glycol di(meth)acrylate; aromatic ring-containing polyfunctional (meth)acrylate compounds such as ethylene oxide adducts or di-(meth)acrylates of bisphenol A or bisphenol F. Further, compounds having a polymerizable unsaturated group and an alkoxysilane group may be also added.

Various kinds of metal oxides may be preferably added to the high refractive index layer in order to further increase the refractive index. Metal oxides to be used preferably may be metal oxides of a metal selected from zirconium, indium, antimony, zinc, tin, cerium, and titanium and having a particle diameter of from 5 nm to 100 nm and their compounded oxides. Since having conductivity in adding to high refractive index, and capable of providing high static charge prevention property to the high refractive index layer, a compounded oxide (ITO) containing indium and tin and a compounded oxide (ATO) containing tin and antimony are preferable to be employed. In terms of the static charge prevention property, the surface resistance of the high refractive index layer is preferably not more than 1×10¹⁰ (Ω/square). If the surface resistance exceeds 1×10¹⁰ (Ω/square), dust tends to easily adhere to the layer and thus foreign substance contamination easily occurs in the film surface at the time of production and therefore, it is not preferable.

The refractive index of the high refractive index layer may be determined in accordance with the refractive index of the substrate and the refractive index of the low refractive index layer. Generally, the refractive index of the high refractive index layer is preferably of from 1.45 to 2.0 and more preferably of from 1.5 to 1.68. If the refractive index of the high refractive index layer is lower than 1.45, the anti-reflection effect is hardly caused and if it exceeds 2.0, the difference of the refractive index from that of the low refractive index layer becomes significant and it becomes difficult for optical setting.

The thickness of the high refractive index layer is preferably of from 40 nm to 200 nm and more preferably of from 60 nm to 150 nm in terms of the anti-reflection effect. In the case where the layer works as the above-mentioned hard coat layer, it is also preferable to form the layer in the thickness of about 0.5 µm to 10 µm. If the high refractive index layer works as the hard coat layer, no hard coat layer is needed and the number of application times can be lowered and accordingly it is preferable for saving the cost.

The optical article of the invention comprises the siloxane-based coating film on the transparent substrate. The content of the tetrafunctional silicon atom in the entire silicon amount in the siloxane-based coating material is in a range from 0.3 to 0.6. Accordingly, the surface hardness of the coating film can be heightened and the refractive index of the coating film can be lowered. Since the surface hardness of the coating film is high, the scratching resistance of the optical article can be improved. Further, since the refractive index of the coating film is low, the anti-reflection property of the optical article can be improved.

Herein the tetrafunctional silicon means silicon atom in which elements are bonded with the silicon that are all oxygen atoms. The existence state may be crystalline state or amorphous state. Silicon included in the entire silicon other than tetrafunctional silicon may include mainly trifunctional silicon and bifunctional silicon and if necessary, it may also include monofunctional silicon. Herein trifunctional silicon means silicon atom in which, among elements bonded with the silicon, three are oxygen and one is another atom. The bifunctional silicon and monofunctional silicon are also same as described.

If the content of the tetrafunctional silicon in the entire silicon in the coating film is high, the hardness of the coating film becomes high, however the refractive index is not lowered. On the other hand, if the content of the tetrafunctional silicon is low, the refractive index of the coating film is lowered, and the hardness is also lowered.

The fluorine content ratio to that of silicon in the coating film is in a range from 0.4 to 0.6. If the fluorine content ratio to that of silicon in the coating film is lower than 0.40, the refractive index cannot be lowered. Further, if the fluorine content ratio to that of silicon in the coating film exceeds 0.60, the surface hardness of the coating film is lowered.

Because of the same reason, the fluorine content ratio to that of carbon in the coating film has to be in a range from 0.40 to 0.65.

Herein the existence state and content ratio of the silicon and the content ratios of fluorine and carbon can be analyzed d ESCA (x-ray electron spectrometric analysis). In addition, the composition distribution occurs generally in the surface and inside of the coating film, and thus it is preferable to carry out the measurement after almost all of the coating film is separated and ground to a powder state.

Further, in the invention since the refractive index of the coating film is set in a range from 1.25 to 1.40, the optical article is provided with excellent anti-reflection property. The refractive index of the coating film is more preferably in a range from 1.38 in terms of the anti-reflection property.

Herein, to accurately measure the refractive index of the coating film, it is preferable to carry out the measurement by forming the coating film on a silicon wafer by applying the siloxane-based coating material and measuring the coating film using a phase difference measurement apparatus. The refractive index of the coating film formed on a substrate such as a film can be measured by an ellipsometer. The number of the layered layers forming the anti-reflection film and the range of the refractive index can be calculated by employing optical calculation simulation from the measured values of the spectroscopic reflectance.

In the optical article of the invention, it is preferable to add the silica fine particles to the siloxane-based coating film as described above. Accordingly, the tetrafunctional silicon content ratio based on the entire silicon amount in the coating film and thus it is made easy to increase the surface hardness of the coating film and lower the refractive index of the coating film. The silica fine particles are particularly preferably silica fine particles having cavities in the inside as described above.

The siloxane-based coating film is preferably made even in the property. Accordingly, the coating film excellent in the surface hardness can be obtained and the optical article excellent in the scratching resistance can be obtained.

The siloxane-based coating film is further preferable to contain an aluminum compound and/or a magnesium compound. Herein, the aluminum compound and/or the magnesium compound is residue of an aluminum chelate compound and/or a magnesium chelate compound used as the above-mentioned curing agent for the siloxane-based coating material. Since these compounds have a low refractive index, they do not inhibit decrease of the refractive index even if they remain in the coating film.

In the optical article of the invention, to increase the anti-reflection property as described, it is preferable to form a high refractive index layer between the transparent substrate and the siloxane-based coating film. Further, also as described above, it is preferable to from a hard coat layer on the transparent substrate. That is, the optical article of the invention is preferable to comprise the transparent substrate, the hard coat layer, the high refractive index layer, and the siloxane-based coating film in this order. Further, as described above, the high refractive index layer may work as the hard coat layer. In this case, the optical article of the invention is preferable to comprise the transparent substrate, the high refractive index layer, and the siloxane-based coating film in this order.

### Examples

Hereinafter, the invention will be described with reference to Examples, however, it is not intended that the invention be limited to the illustrated Examples. The evaluations were carried out by the following methods.

### 1. Production of substrate for coating film formation

A coating solution for a hard coat layer (DESOLITE KZ7224, manufactured by JSR Corporation) was applied to an easy adhesion face of a 100 µm-thick PET (polyethylene terephthalate) film (LUMIRROR (registered trademark) QT63, manufactured by Toray Industries, Inc.) by a micro-gravure coater in a manner that the dry thickness became 7 µm. Next, after dried at 120°C for 1 minute, the coating solution was cured by radiating ultraviolet rays (1000 mJ/cm²) to produce a film having a hard coat layer. Further, a coating solution for a high refractive index and anti-static layer (OPSTAR (registered trademark) TU4005, manufactured by JSR Corporation) was applied to the face having the hard coat layer by a micro-gravure coater in a manner that the dry thickness became 90 nm. Next, after drying at 120°C for 1 minute, the coating solution was cured by radiating ultraviolet rays (1000 mJ/cm²) to form a high refractive index and anti-static layer on the hard coat layer. The film obtained in the above-mentioned manner was used as a substrate for coating film formation.

### 2. Production of coating film (1)

As a low refractive index layer, each siloxane-based coating material of the coating materials A to F and A1 to C1, which will be described later, was applied to the high refractive index and anti-static layer of the above-mentioned substrate by a micro-gravure coater in a manner that the dry thickness became 110 nm. Next, the coating solution was dried and cured at 130°C for 1 minute to form a low refractive index layer on the high refractive index and anti-static layer and obtain an anti-reflection film.

### 3. Production of coating film (2)

As a low refractive index layer, each siloxane-based coating material of the coating materials A to F and A1 to C1, which will be described later, was applied to a silicon wafer by a spin coater in a manner that the dry thickness became 0.1 µm. Next, the coating solution was dried and cured at 130°C for 1 minute in an inert oven INH-21CD (manufactured by Koyo Thermo Systems Co., Ltd.) to form a coating film.

### 4. Measurement of refractive index of coating film

The above-mentioned coating film formed on the silicon wafer was subjected to refractive index measurement at 633 mm by a phase shifter (manufactured by Nikon Corporation).

### 5. Measurement of reflectance of optical article

After the surface on the opposite to the measurement face (the face in which the low refractive index layer is formed) of the anti-reflection film produced in the above-mentioned manner was surface roughened evenly by water-proof sand paper of number 320 to 400 so as to make the 60°C glossiness (JIS Z 8741) not more than 10, a black color coating material was applied for colorization so as to lower the visible light transmittance to not more than 5%. The absolute reflectance spectra in wavelength range from 380 nm to 800 nm was measured at an incident angle of 5 degree from the measurement face by a spectrophotometer (UV-3150) manufactured by Shimadzu Corporation to measure the lowest reflectance in the wavelength range from 400 nm to 700 nm. In this connection, if the lowest reflectance was not more than 0.6%, good anti-reflection property can be obtained.

### 6. Evaluation of hardness of coating film

A standard test probe (hardness HRC-60, φ0.5 mm, manufactured by Rockwell Automation, Inc. was set on the measurement face (the face in which the low refractive index layer is formed) of the anti-reflection film produced in the above-mentioned manner, load of 1±0.3 kg was applied, and the measurement face was vacuumed at 30 to 40 mm stroke. After vacuuming, the surface was observed at 45 cm of distance from the coating film surface under 1000 lux lighting to evaluate the scratching strength and the measurement value was employed as the hardness. The determination standard grades were 4 in the case there was no scratching at all; 3 in the case the reflection color was changed (from purple to red) under fluorescent light; 2 in the case no reflection was observed and scratches were seen under fluorescent light; and 1 in the case the substrate under layer was observed. If the grade was 3 or 4, it means excellent.

### 7. Evaluation of stain resistance of coating film

After 5 ml of tap water was dripped on the measurement face (the face in which the low refractive index layer is formed) of the anti-reflection film produced in the above-mentioned manner and the measurement face was kept at a room temperature for 48 hours, the remaining of water stain when the measurement face was wiped with cloth was observed. If the water stain was removed, it was evaluated as good and if it was not removed, it was evaluated as poor.

### 8. Evaluation of storage stability of siloxane-based coating material

After each siloxane-based coating material was kept at a room temperature for 2 weeks, a coating film was produced in the above-mentioned manner and the film surface state was observed by eye observation. If no cohesion was observed in the surface, the storage stability was evaluated as good and if cluster was observed in the surface, the storage stability was evaluated as poor.

### 9. Evaluation of evenness of siloxane-based coating material

The cross-section of the low refractive index layer of the anti-reflection film produced as described was observed by a transmission electron microscope (H-7100FA model, manufactured by Hitachi Ltd.) at an acceleration voltage of 100 kV. The sample preparation was carried out by an ultrathin sectioning method. In the case the siloxane-based coating film is observed at a magnification of 100, 000 times or 200,000 times, no boundary part is observed between the silica fine particles and the siloxane compound in the even state. On the other hand, clear boundary parts are observed between the silica fine particles and the siloxane compound in the uneven state.

### 10. Measurement of element content ratio of silicon, fluorine, and carbon

The surface of the low refractive index layer of the anti-reflection film produced as described was measured by x-ray electron spectroscopy for chemical analysis (ESCA). Taking the possibility of different composition in the surface and the inside of the coating film into consideration, it is preferable to carry out measurement by using a measurement sample prepared by peeling the most part of the coating film and powdering the peeled coating film. Based on the element composition (atomic %) obtained by ESCA, the composition ratio of each element can be known. Particularly, the ratio of tetrafunctional silicon and trifunctional silicon can be known based on peak segmentation of Si2P.

### Example 1

At first, 95.2 g (0.7 mol) of methyltrimethoxysilane and 65.4 g (0.3 mol) of trifluoropropyltrimethoxysilane were dissolved in 300 g of propylene glycol monomethyl ether and 100 g of isopropanol. During stirring, 297.9 g of dispersion of silica fine particles having cavities in the inside of outer shells and having a number average particle diameter of 50 nm (isopropanol dispersion, solid matter concentration 20.5%, manufactured by Catalysts and Chemicals Industries Co., Ltd.), 54 g of water, and 1.8 g of formic acid were dropwise added to the obtained solution while the reaction temperature was kept from exceeding 30°C. On completion of dropwise addition, the obtained solution was heated at a bath temperature of 40°C for 2 hours and thereafter, the solution was heated at a bath temperature of 85°C for 2 hours and after the inner temperature was increased to 80°C and heating was continued for 1.5 hours, the solution was cooled to a room temperature to obtain a polymer solution A.

As an aluminum type curing agent, a solution obtained by dissolving 4.8 g of aluminum tris(acetylacetate) (trade name: Aluminum Chelate A(W), manufactured by Kawaken Fine Chemicals Co., Ltd.) in 125 g of methanol was added to the obtained polymer solution A and further 1500 g of isopropanol and 250 g of propylene glycol monomethyl ether were added and the resulting mixture was stirred at a room temperature for 2 hours to obtain a siloxane-based coating material A.

A coating film was produced on a substrate and a silicon wafer using the obtained coating material A in the above-mentioned manner and subjected to the evaluation of the refractive index, reflectance, storage stability, hardness, stain resistance property, and evenness of the coating film.

Figs. 1 and 2 show TEM photograph of the cross-section of the obtained coating film. In the siloxane-based coating film shown in Fig. 2, the cavities 1 in the inside of the silica fine particles are seen like white circles. The outer shells of the silica fine particles and the siloxane compound exit in the outside of the cavities, however as shown in the photograph, both are made even and no boundary is observed between them.

In the obtained coating film, the element content of tetrafunctional silicon in the entire silicon amount is 0.505 and the element content of fluorine in the entire silicon amount is 0.445; and in the coating film, the content ratio of fluorine to that of carbon is 0.562.

### Example 2

At first, 95.2 g (0.7 mol) of methyltrimethoxysilane and 65.4 g (0.3 mol) of trifluoropropyltrimethoxysilane were dissolved in 300 g of propylene glycol monomethyl ether and 100 g of isopropanol. During stirring, 730 g of sol of silica fine particles having no cavities in the inside and having a number average particle diameter of 12 nm (trade name: IPA-ST, solid matter concentration 30%, manufactured by Nissan Chemical Industries, Ltd.), 60 g of water, and 2 g of formic acid were dropwise added to the obtained solution while the reaction temperature was kept from exceeding 30°C. On completion of dropwise addition, the obtained solution was heated at a bath temperature of 40°C for 2 hours and thereafter, the solution was heated at a bath temperature of 85°C for 2 hours and after the inner temperature was increased to 80°C and heating was continued for 1.5 hours, the solution was cooled to a room temperature to obtain a polymer solution B.

As an aluminum type curing agent, a solution obtained by dissolving 4.8 g of aluminum tris(acetylacetate) (trade name: Aluminum Chelate A(W), manufactured by Kawaken Fine Chemicals Co., Ltd.) in 250 g of methanol was added to the obtained polymer solution B and further 2000 g of isopropanol and 500 g of propylene glycol monomethyl ether were added and the resulting mixture was stirred at a room temperature for 2 hours to obtain a siloxane-based coating material B.

A coating film was produced on a substrate and a silicon wafer using the obtained coating material B in the above-mentioned manner and subjected to the evaluation of the refractive index, reflectance, storage stability, hardness, and stain resistance property.

### Example 3

At first, 109.0 g (0.8 mol) of methyltrimethoxysilane, 56.8 g (0.1 mol) of heptadecafluorodecyltrimethoxysilane, and 12 g (0.1 mol) of dimethyldimethoxysilane were dissolved in 300 g of diacetone alcohol and 100 g of isopropanol. During stirring, 250 g of sol of silica fine particles having no cavities in the inside and having a number average particle diameter of 12 nm (trade name: MIBK-ST, solid matter concentration 30%, manufactured by Nissan Chemical Industries, Ltd.), 60 g of water, and 2 g of acetic acid were dropwise added to the obtained solution while the reaction temperature was kept from exceeding 30°C. On completion of dropwise addition, the obtained solution was heated at a bath temperature of 40°C for 2 hours and thereafter, the solution was heated at a bath temperature of 85°C for 2 hours and after the inner temperature was increased to 80°C and heating was continued for 1.5 hours, the solution was cooled to a room temperature to obtain a polymer solution C.

As a magnesium type curing agent, a solution obtained by dissolving 3.8 g of magnesium bis(ethylacetoacetate) in 250 g of methanol was added to the obtained polymer solution C and further 1700 g of isopropanol and 500 g of dieacetone alcohol were added and the resulting mixture was stirred at a room temperature for 2 hours to obtain a siloxane-based coating material C. A coating film was produced on a substrate and a silicon wafer using the obtained coating material C in the above-mentioned manner and subjected to the evaluation of the refractive index, reflectance, storage stability, hardness, and stain resistance property.

### Example 4

At first, 109.0 g (0.8 mol) of methyltrimethoxysilane, 56.8 g (0.1 mol) of heptadecafluorodecyltrimethoxysilane, and 15.2 g (0.1 mol) of tetramethoxysilane were dissolved in 300 g of propylene glycol monomethyl ether. During stirring, 890 g of sol of silica fine particles having cavities in the inside and having a number average particle diameter of 20 nm (trade name:SOC-NPA-4MA, solid matter concentration 8.5%, manufactured by Sumitomo Osaka Cement Co., Ltd.), 60 g of water, and 2 g of acetic acid were dropwise added to the obtained solution while the reaction temperature was kept from exceeding 30°C. On completion of dropwise addition, the obtained solution was heated at a bath temperature of 30°C for 3 hours and thereafter, the solution was heated at a bath temperature of 85°C for 2 hours and after the inner temperature was increased to 80°C and heating was continued for 2 hours, the solution was cooled to a room temperature to obtain a polymer solution D.

As an aluminum type curing agent, a solution obtained by dissolving 4.0 g of aluminum tris(ethylacetoacetate) (trade name: ALCH-TR, manufactured by Kawaken Fine Chemicals Co., Ltd.) in 250 g of methanol was added to the obtained polymer solution D and further 1300 g of isopropanol and 500 g of propylene glycol monoethyl ether were added and the resulting mixture was stirred at a room temperature for 2 hours to obtain a siloxane-based coating material D. A coating film was produced on a substrate and a silicon wafer using the obtained coating material D in the above-mentioned manner and subjected to the evaluation of the refractive index, reflectance, storage stability, hardness, and stain resistance property.

### Example 5

A siloxane-based coating material E was obtained by adding 3.2 g (15.6mmol) of trifluoropropyltrimethoxysilane to the coating material B obtained in Example 2 and stirring the resulting mixture at a room temperature for 1 hour.

A coating film was produced on a substrate and a silicon wafer using the obtained coating material E in the above-mentioned manner and subjected to the evaluation of the refractive index, reflectance, storage stability, hardness, and stain resistance property.

### Example 6

At first, 95.2 g (0.7 mol) of methyltrimethoxysilane and 65.4 g (0.3 mol) of trifluoropropyltrimethoxysilane were dissolved in 300 g of propylene glycol monomethyl ether. During stirring, 1100 g of sol of silica fine particles having cavities in the inside and having a number average particle diameter of 20 nm (trade name:SOC-NPA-4MA, solid matter concentration 8.5%, manufactured by Sumitomo Osaka Cement Co., Ltd.), 60 g of water, and 1.5 g of formic acid were dropwise added to the obtained solution while the reaction temperature was kept from exceeding 30°C. On completion of dropwise addition, the obtained solution was heated at a bath temperature of 40°C for 2 hours and thereafter, the solution was heated at a bath temperature of 75°C for 2 hours and after the inner temperature was increased to 70°C and heating was continued for 1.5 hours, the solution was cooled to a room temperature to obtain a polymer solution F.

As an aluminum type curing agent, a solution obtained by dissolving 4.8 g of aluminum tris(acetylacetoacetate) (trade name: Aluminum Chelate A(W), manufactured by Kawaken Fine Chemicals Co., Ltd.) in 250 g of methanol was added to the obtained polymer solution F and further 1300 g of isopropanol, 500 g of propylene glycol monopropyl ether, and 4.0 g (16.1 mmol) of 3-methacryloxypropyltrimethoxysilane were added and the resulting mixture was stirred at a room temperature for 2 hours to obtain a siloxane-based coating material F. A coating film was produced on a substrate and a silicon wafer using the obtained coating material F in the above-mentioned manner and subjected to the evaluation of the refractive index, reflectance, storage stability, hardness, and stain resistance property.

### Example 7

A siloxane-based coating material G was obtained in the same manner as Example 3, except that 19.8 g (0.1 mol) of phenyltrimethoxysilane was used in place of 56.8 g (0.1 mol) of heptadecafluorodecyltrimethoxysilane; 110 g of sol of silica fine particles having no cavities in the inside and having a number average particle diameter of 100 nm and dissolved in isopropanol (trade name: IPA-ST-ZL, solid matter concentration 30%, manufactured by Nissan Chemical Industries, Ltd.) was used in place of sol of silica fine particles MIBK-ST; and 14.8 g of vinyltrimethoxysilane was further added. A coating film was produced on a substrate and a silicon wafer using the obtained coating material G in the above-mentioned manner and subjected to the evaluation of the refractive index, reflectance, storage stability, hardness, and stain resistance property.

In the obtained coating film, the element content of tetrafunctional silicon in the entire silicon amount is 0.333 and the element content of fluorine in the entire silicon amount is 0; and in the coating film, the element content ratio of fluorine to that of carbon is 0.

### Example 8

A polysiloxane-based coating material H was obtained in the same manner as Example 1, except that the addition amount of silane compound was changed to 88.4 g of methyltrimethoxysilane and 76.3 g of trifluoropropyltrimethoxysilane and 263.4 g of a dispersion of silica fine particle having cavities in the inside of outer shells and having a number average particle diameter of 50 nm (isopropanol dispersion type, solid matter concentration 20.5%, manufactured by Catalysts and Chemicals Industries Co., Ltd.) was used. A coating film was produced on a substrate and a silicon wafer using the obtained coating material H in the above-mentioned manner and subjected to the evaluation of the refractive index, reflectance, storage stability, hardness, and stain resistance property.

In the obtained coating film, the element content of tetrafunctional silicon in the entire silicon amount is 0.47 and the element content of fluorine in the entire silicon amount is 0.55; and in the coating film, the element content ratio of fluorine to that of carbon is 0.62.

### Example 9

A coating material I was obtained in the same manner as Example 3, except that the addition amount of sol of silica fine particles was changed from 250 g to 56 g. A coating film was produced on a substrate and a silicon wafer using the obtained coating material I in the above-mentioned manner and subjected to the evaluation of the refractive index, reflectance, storage stability, hardness, and stain resistance property.

In the obtained coating film, the element content of tetrafunctional silicon in the entire silicon amount is 0.22 and the element content of fluorine in the entire silicon amount is 1.33; and in the coating film, the element content ratio of fluorine to that of carbon is 0.85.

### Comparative Example 1

At first, 95.2 g (0.7 mol) of methyltrimethoxysilane and 65.4 g (0.3 mol) of trifluoropropyltrimethoxysilane were loaded to a reaction container and during stirring, 54 g of water and 1.8 g of formic acid were dropwise added while the reaction temperature was kept from exceeding 30°C. On completion of dropwise addition, the obtained solution was heated at a bath temperature of 30°C for 5 hours and thereafter, the solution was cooled to a room temperature to obtain a polymer solution A1. A siloxane-based coating material A1 was obtained by adding 297.9 g of dispersion of silica fine particles having cavities in the inside of outer shells (isopropanol dispersion, solid matter concentration 20.5%, manufactured by Catalysts and Chemicals Industries Co., Ltd.) and a solution obtained by dissolving 4.8 g of aluminum tris(acetylacetate) (trade name: Aluminum Chelate A(W), manufactured by Kawaken Fine Chemicals Co., Ltd.) as an aluminum type curing agent in 125 g of methanol, further adding 1600 g of isopropanol and 550 g of propylene glycol monomethyl ether, and stirring the obtained mixture at a room temperature for 2 hours.

A coating film was produced on a substrate and a silicon wafer using the obtained coating material A1 in the above-mentioned manner and subjected to the evaluation of the refractive index, reflectance, storage stability, hardness, stain resistance property, and evenness of the coating film.

Figs. 3 and 4 show TEM photograph of the cross-section of the obtained coating film. In the siloxane-based coating film shown in Fig. 4, the cavities 1 in the inside of the silica fine particles are seen like white circles. The outer shells 2 of the silica fine particles are observed as dark color and thin layers. Further outside of the outer shells, layers 3 of the siloxane compound are observed as a pale color matrix. As shown in the photograph, the boundary parts 4 are observed between the silica fine particles and the siloxane compound and it is found both are not made even.

### Comparative Example 2

At first, 95.2 g (0.7 mol) of methyltrimethoxysilane and 65.4 g (0.3 mol) of trifluoropropyltrimethoxysilane were loaded to a reaction container and during stirring, 60 g of water and 2 g of formic acid were dropwise added while the reaction temperature was kept from exceeding 30°C. On completion of dropwise addition, the obtained solution was heated at a bath temperature of 30°C for 5 hours and thereafter, the solution was cooled to a room temperature to obtain a polymer solution B1.

A siloxane-based coating material B1 was obtained by adding 210 g of sol of silica fine particles having no cavities in the inside and having a number average particle diameter of 12 nm (trade name: IPA-ST, solid matter concentration 30%, manufactured by Nissan Chemical Industries, Ltd.) and as an aluminum type curing agent, a solution obtained by dissolving 4.8 g of aluminum tris(acetylacetate) (trade name: Aluminum Chelate A(W), manufactured by Kawaken Fine Chemicals Co., Ltd.) in 250 g of methanol, further adding 1800 g of isopropanol and 800 g of propylene glycol monomethyl ether, and stirring the obtained mixture at a room temperature for 2 hours.

A coating film was produced on a substrate and a silicon wafer using the obtained coating material B1 in the above-mentioned manner and subjected to the evaluation of the refractive index, reflectance, storage stability, hardness, and stain resistance property.

### Comparative Example 3

A coating material C1 was obtained in the same manner as Example 1, except that no silica fine particle dispersion was added. A coating film was produced on a substrate and a silicon wafer using the obtained coating material C1 in the above-mentioned manner and subjected to the evaluation of the refractive index, reflectance, storage stability, hardness, and stain resistance property. In the obtained coating film, the element content of tetrafunctional silicon in the entire silicon amount is 0 and the element content of fluorine in the entire silicon amount is 0.89; and in the coating film, the content ratio of fluorine to that of carbon is 0.56.

### Comparative Example 4

A fluorine-containing organopolysiloxane type coating material D1 was obtained in the same manner as Comparative Example 1, except that amount of trimethoxysilane was changed to 122.4 g; the amount of trifluoropropyltrimethoxysilane was changed to 21.8 g; and the amount of the dispersion of silica fine particles having cavities in the inside of outer shells (isopropanol dispersion, solid matter concentration 20.5%, manufactured by Catalysts and Chemicals Industries Co., Ltd.) was changed to 75.6 g. A coating film was produced on a substrate and a silicon wafer using the obtained coating material D1 in the above-mentioned manner and subjected to the evaluation of the refractive index, reflectance, storage stability, hardness, and stain resistance property.

In the obtained coating film, the element content of tetrafunctional silicon in the entire silicon amount is 0.2 and the element content of fluorine in the entire silicon amount is 0.24; and in the coating film, the content ratio of fluorine to that of carbon is 0.25.

The evaluation results of the compositions of Examples 1 to 9 and Comparative Examples 1 to 4 are shown in Tables 1 and 2.

[Table 1-1]

**Table 1**

| | Coating material | Siloxane compound | | | | | |
|---|---|---|---|---|---|---|---|
| | | Silane compound (1) | silane compound (2) | silane compound (3) | silane compound (4) | silane compound (5) | silica fine particle |
| Example 1 | A | Trifluoropropyl-trimethoxysilane | None | Methyltrimethoxysilane | None | None | cavities exist |
| Example 2 | B | Trifluoropropyl-trimethoxysilane | None | Methyltrimethoxysilane | None | None | IPA-ST (No cavity) |
| Example 3 | C | Heptadecafluorodecyl-trimethoxysilane | None | Methyltrimethoxysilane | Dimethyldimethoxysilane | None | MIBK-ST (No cavity) |
| Example 4 | D | Heptadecafluorodecyl-trimethoxysilane | None | Methyltrimethoxysilane | None | Tetrameth-oxysilane | SOC-NPA-4MA (No cavity) |
| Example 5 | E | Trifluoropropyl-trimethoxysilane | None | Methyltrimethoxysilane | None | None | IPA-ST (No cavity) |
| Example 6 | F | Trifluoropropyl-trimethoxysilane | None | Methyltrimethoxysilane | None | None | SOC-NPA-4MA (No cavity) |
| Example 7 | G | None | Vinyl-trimethoxysilane | Methyltrimethoxysilane, phenyltrimethoxysilane | Dimethyldimethoxysilane | None | 1PA-ST-ZL (No cavity) |
| Example 8 | H | Trifluoropropyl-trimethoxysilane | None | Methyltrimethoxysilane | None | None | cavities exist |
| Example 9 | I | Heptadecafluorodecyl-trimethoxysilane | None | Methyltrimethoxysilane | Dimethyldimethoxysilane | None | MIBK-ST (No cavity) |
| Comparative example 1 | A1 | Trifluoropropyl-trimethoxysilane 1 | None | Methyltrimethoxysilane-1 | None | None | cavities exist |
| Comparative example 2 | B1 | Trifluoropropyl-trimethoxysilane*1 | None | Methyltrimethoxysilane*1 | None | None | IPA-ST (No cavity*2) |
| Comparative example 3 | Cl | Trifluoropropyl-trimethoxysilane | None | Methyltrimethoxysilane | None | None | None |
| Comparative example 4 | E1 | Trifluoropropyl-trimethoxysilane | None | Methyltrimethoxysilane | None | None | cavities exist |

*1: utilized for silanol synthesis
*2: addition at the time of coating film formation but not at the time of polymer production

[Table 1-2]

**Table 1 (continued)**

| | Curing agent | Solvent 100-180°C | Solvent <100°C | Supplementary addition of silane compound (1) | supplementary addition of silane compound (2) |
|---|---|---|---|---|---|
| Example 1 | Aluminum Chelate A (W) | Propylene glycol monomethyl ether | Isopropanol, methanol | None | None |
| Example 2 | Aluminum Chelate A (W) | Propylene glycol monomethyl ether | Isopropanol, methanol | None | None |
| Example 3 | Magnesium bis (ethylacetate) | Diacetone alcohol | Isopropanol, methanol | None | None |
| Example 4 | ALCH-TR | Propylene glycol monoethyl ether | Isopropanol, methanol | None | None |
| Example 5 | Aluminum Chelate A (W) | Propylene glycol monomethyl ether | Isopropanol, methanol | Trifluoropropyl-trimethoxysilane | None |
| Example 6 | Aluminum Chelate A (W) | Propylene glycol monopropyl ether | Isopropanol, methanol | None | 3-methacry-loxypropyl-trimethoxysilane |
| Example 7 | Magnesium bis (ethylacetate) | Diacetone alcohol | Isopropanol, methanol | None | None |
| Example 8 | Aluminum Chelate A (W) | Propylene glycol monomethyl ether | Isopropanol, methanol | None | None |
| Example 9 | Magnesium bis (ethylacetate) | Diacetone alcohol Diacetone alcohol | Isopropanol, methanol | None | None |
| Comparative example 1 | Aluminum Chelate A (W) | Propylene glycol monomethyl ether | Isopropanol, methanol | None | None |
| Comparative example 2 | Aluminum Chelate A (W) | Propylene glycol monomethyl ether | Isopropanol, methanol | None | None |
| Comparative example 3 | ALCH-TR | Propylene glycol monomethyl ether | Isopropanol, methanol | None | None |
| Comparative example 4 | Aluminum Chelate A (W) | Propylene glycol monomethyl ether | Isopropanol, methanol | None | None |

[Table 2]

**Table 2**

| | Coating material | Silica fine particles | | Refractive index | Reflectance (%) | Storage stability | Hardness | Stain resistance property |
|---|---|---|---|---|---|---|---|---|
| | | Number average particle diameter (nm) | Content (% by weight) | | Lowest reflectance (wavelength in the parenthesis) | | | |
| Example 1 | A | 50 | 40 | 1.36 | Lower than 0.1 (590 nm) | Good | 4 | Good |
| Example 2 | B | 12 | 70 | 1.36 | 0.13 (600 nm) | Good | 3 | Good |
| Example 3 | C | 12 | 42 | 1.38 | 0.17 (600 nm) | Good | 3 | Good |
| Example 4 | D | 20 | 41 | 1.36 | Lower than 0.1 (590 nm) | Good | 3 | Good |
| Example 5 | E | 12 | 70 | 1.37 | 0.15 (600 nm) | Good | 4 | Good |
| Example 6 | F | 20 | 50 | 1.35 | Lower than 0.1 (590 nm) | Good | 4 | Good |
| Example 7 | G | 100 | 29 | 1.4 | 0.35 (620 nm) | Good | 4 | Good |
| Example 8 | H | 50 | 36 | 1.38 | 0.21 (600 nm) | Good | 3 | Good |
| Example 9 | I | 12 | 13 | 1.4 | 0.27 (620 nm) | Good | 2 | Good |
| Comparative example 1 | A1 | 50 | 40 | 1.36 | Lower than 0.1 (600 nm) | Poor | 2 | Poor |
| Comparative example 2 | B1 | 12 | 41 | 1.38 | 0.15 (600 nm) | Poor | 2 | Poor |
| Comparative example 3 | C1 | - | 0 | 1.41 | 0.35 (620 nm) | Poor | 1 | Good |
| Comparative example 4 | D1 | 50 | 17 | 1.43 | 0.7 (610 nm) | Poor | 3 | Poor |

### Industrial Applicability

A coating film formed using a siloxane-based coating material of the invention can be used for a low refractive index layer to be used for anti-reflection, a buffer coat for a semiconductor device, a leveling agent, a protection film of a liquid crystal display as well as an interlayer insulating film, a material for forming a waveguide, a material for a phase shifter, and various kinds of protection films.

An optical article of the invention can be used preferably for an anti-reflection coating film, an anti-reflection film, an anti-reflection plate, an optical filter, an optical lens, and a display. In Particular, it is used preferably for an anti-reflection sheet and an anti-reflection film to be used for a display face of a display apparatus (CRT, LCD, PDP, EL, FED, and the like), its front filter, window glass, show window glass, an instrument cover, cover glass of a watch.

## Claims

1. A siloxane-based coating material comprising silica fine particles, a siloxane compound, and a curing agent, wherein a coating film formed using the coating material has evenness.

2. The siloxane-based coating material according to claim 1 further comprising a solvent having a boiling point of 100 to 180°C in atmospheric pressure and a solvent having a boiling point of lower than 100°C in atmospheric pressure.

3. The siloxane-based coating material according to claim 1 or 2, wherein the siloxane compound is hydrolyzed products and/or condensation products of one or more silane compounds selected from compounds defined by the following formulas (1) to (5):
R¹Si (OR⁶)₃ (1)
wherein R¹ denotes a fluoroalkyl having 3 to 17 fluorine atoms; and R⁶ denotes a methyl group, an ethyl group, a propyl group, an isopropyl group, or an acetyl group and all may be same or different;
R²Si (OR⁷)₃ (2)
wherein R² denotes a group selected from a vinyl group, an allyl group, an alkenyl group, an acryl group, a methacryl group, a methacryloxy group, a cyano group, an epoxy group, a glycidoxy group, an amino group, and their substituted groups; and R⁷ denotes a methyl group, an ethyl group, a propyl group, an isopropyl group, a methoxymethyl group, or an acetyl group and all may be same or different;
R³Si(OR⁸)₃ (3)
wherein R³ denotes a group selected from hydrogen, an alkyl group, an aryl group, and their substituted groups; and R⁸ denotes a methyl group, an ethyl group, a propyl group, or a butyl group and all may be same or different;
R⁴R⁵Si (OR⁹)₂ (4)
wherein R⁴ and R⁵ independently denote a group selected from hydrogen, an alkyl group, a fluoroalkyl group, an aryl group, an alkenyl group, a methacryloxy group, an epoxy group, a glycidoxy group, an amino group, and their substituted groups and may be same or different; and R⁹ denotes a methyl, group an ethyl group, a propyl group, an isopropyl group, or an acetyl group and all may be same or different; and
Si(OR¹⁰)₄ (5)
wherein R¹⁰ denotes a methyl group or an ethyl group and all may be same or different.

4. The siloxane-based coating material according to any one of claims 1 to 3, wherein the number average particle diameter of the silica fine particles is in a range from 1 nm to 200 nm.

5. The siloxane-based coating material according to one of claims 1 to 4, wherein the silica fine particles are silica fine particles having cavities in the inside.

6. The siloxane-based coating material according to any one of claims 1 to 5, wherein the curing agent is an aluminum chelate compound and/or a magnesium chelate compound.

7. The siloxane-based coating material according to any one of claims 1 to 6 further comprising a fluorine-containing silane compound defined by the formula (1):
R¹Si(OR⁶)₃ (1)
wherein R¹ denotes a fluoroalkyl group having 3 to 17 fluorine atoms; and R⁶ denotes a methyl group, an ethyl group, a propyl group, an isopropyl group, or an acetyl group and all may be same or different.

8. The siloxane-based coating material according to any one of claims 1 to 7 further comprising a fluorine-containing silane compound defined by the formula (2):
R²Si (OR⁷)₃ (2)
wherein R² denotes a group selected from a vinyl group, an allyl group, an alkenyl group, an acryl group, a methacryl group, a methacryloxy group, a cyano group, an epoxy group, a glycidoxy group, an amino group, and their substituted groups; and R⁷ denotes a methyl group, an ethyl group, a propyl group, an isopropyl group, a methoxymethyl group, or an acetyl group and all may be same or different;

9. The siloxane-based coating material according to any one of claims 1 to 8, wherein the coating film has a refractive index in a range from 1.25 to 1.4.

10. A coating film obtained by curing the coating material according to one of claims 1 to 9.

11. An optical article having a coating film formed on a transparent substrate by using the coating material according to one of claims 1 to 9.

12. An optical article having a siloxane-based coating film formed on a transparent substrate, wherein the element content ratio of tetrafunctional silicon in entire silicon is in a range from 0.3 to 0.6; the content ratio of fluorine to silicon is in a range from 0.4 to 0.6; and the content ratio of fluorine to carbon is in a range from 0.4 to 0.65 in the coating film and the coating film has a refractive index in a range from 1.25 to 1.4.

13. The optical article according to claim 12 comprising silica fine particles in the coating film.

14. The optical article according to claim 13, wherein the silica fine particles are silica fine particles having cavities in the inside.

15. The optical article according to any one of claims 12 to 14, wherein the thickness of the siloxane-based coating film is in a range from 0. 001 to 0.5 µm and the number average particle diameter is smaller than the thickness of the siloxane-based coating film.

16. The optical article according to any one of claims 12 to 15, wherein the siloxane-based coating film becomes even.

17. The optical article according to one of claims 12 to 16, wherein the siloxane-based coating film further contains an aluminum compound and/or a magnesium compound.

18. The optical article according to any one of claims 12 to 17, wherein the transparent substrate is a film.

19. The optical article according to any one of claims 12 to 18, comprising a high refractive index layer having refractive index of 1.45 to 2.0 between the transparent substrate and the siloxane-based coating film.

20. The optical article according to any one of claims 12 to 19, wherein the transparent substrate has a hard coat layer with a thickness of from 0.2 to 20 µm.

21. A production method of a siloxane-based coating material, comprising a step of hydrolyzing a silane compound in a solvent by an acid catalyst in the presence of silica fine particles and successively subjecting the hydrolyzed product to condensation reaction.

22. The production method of a siloxane-based coating material according to claim 21, wherein the silane compound is one or more silane compounds selected from silane compounds defined by the formulas (1) to (5).
